(19) **Europäisches Patentamt / European Patent Office / Office européen des brevets**

(11) **EP 2 383 609 B1**

(12) **EUROPEAN PATENT SPECIFICATION**

(45) Date of publication and mention
of the grant of the patent:
**31.07.2013 Bulletin 2013/31**

(51) Int Cl.:
*G03B 21/00* (2006.01)     *H04N 5/74* (2006.01)
*G06F 3/03* (2006.01)     *G06K 9/00* (2006.01)

(21) Application number: **10172300.5**

(22) Date of filing: **09.08.2010**

(54) **Interactive display apparatus and operating method thereof**

Interaktives Display-System und Betriebsverfahren dafür

Appareil d'affichage interactif et son procédé de fonctionnement

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.04.2010 KR 20100040573**

(43) Date of publication of application:
**02.11.2011 Bulletin 2011/44**

(73) Proprietor: **Samsung Electronics Co., Ltd.
Suwon-si, Gyeonggi-do, 443-742 (KR)**

(72) Inventors:
• **Jang, Jong-hyuk
  Gyeonggi-do (KR)**

• **Ryu, Hee-seob
  Gyeonggi-do (KR)**

(74) Representative: **Robinson, Ian Michael
Appleyard Lees
15 Clare Road
Halifax HX1 2HY (GB)**

(56) References cited:
**EP-A1- 1 892 608     EP-A2- 0 718 748
EP-A2- 1 087 327     WO-A1-95/34881
GB-A- 2 377 607     JP-A- 2000 181 617
JP-A- 2000 214 994     JP-A- 2004 265 235
JP-A- 2005 141 151     US-A1- 2004 085 522**

**Description**

BACKGROUND OF THE INVENTION

**Field of the Invention**

Apparatuses and methods consistent with the present invention relate to an interactive display apparatus and an operating method thereof.

**Description of the Related Art**

Recently, it has become possible to capture an image of a presentation simultaneously being displayed or projected by a presentation device (e.g., a projector) onto a display screen, including not only the projected image, but also the entire display screen and an area surrounding the display screen. As a result, if a user uses a pointing device to irradiate a light irradiated onto the display screen and surrounding area (e.g., as might be used during a presentation), it is possible to also capture the irradiated light of the pointing device. The information corresponding to the light generated by the user's pointing device can then be stored as a captured image and utilized in various ways. However, at present, interactive functionality between such related art display devices and pointing devices is very limited. As such, additional interactive capabilities are desirable.

EP-A-1,087,327 (Seiko Epson) mentions an interactive display presentation system with a computer-controlled image projector, a laser pointer and a digital camera that acquires the presented images. A control module identifies gesture spatial patterns made by the laser pointer to select a corresponding display command. The appended claims have been characterised based on this document.

**SUMMARY OF THE INVENTION**

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Accordingly, an aspect of the present invention is to provide an interactive display apparatus capable of supporting an additional interactive function, and an operating method thereof.

An exemplary embodiment of the present invention provides an interactive display apparatus which may include: a capturing unit operable to capture an image including a displayed image which is displayed on a display screen and a light of a pointing device irradiated onto the display screen; a memory which stores the captured image; a detection unit which determines coordinate information for the light of the pointing device irradiated onto the display screen based on the captured image; and a controller which determines whether the light of the pointing device is moved outside of the displayed image based on the coordinate information, and controls the apparatus to perform a predetermined operation from among a plurality of predetermined operations if the light of the pointing device is moved outside of the displayed image.

The pointing device may be a laser pointer.

The detection unit may further determine a direction the light of the pointing device is moved, if the light of the pointing device is moved outside of the displayed image.

The predetermined operation may be selected from among the plurality of predetermined operations based on the direction the light of the pointing device.

The determining of the coordinate information may include determining current horizontal and vertical coordinates of the light of the pointing device irradiated onto the display screen.

The determining whether the light of the pointing device is moved outside of the displayed image based on the coordinate information may include comparing a previous position of the light of the pointing device irradiated onto the display screen with a current position of the light of the pointing device irradiated onto the display screen.

If the previous position of the light of the pointing device irradiated onto the display screen is inside an area of the displayed image and a current position of the light of the pointing device irradiated onto the display screen is outside the area of the displayed image, the controller may determine that the light of the pointing device is moved outside of the displayed image.

The determining of the coordinate information may include determining whether a pixel of the captured image is greater than a predetermined threshold value.

The predetermined operation may include at least one of a scrolling operation, a page-changing operation, zooming operation, a menu operation, a drawing operation, a selecting operation, a window-controlling operation and an application-changing operation.

If the light of the pointing device is moved outside of the displayed image, the controller may further determine whether the light of the pointing device is moved inside of the displayed image within a predetermined time after moving outside of the displayed image.

The interactive display apparatus may further comprise a projector operable to project the image onto the display screen.

Another exemplary embodiment of the present invention may provide a method for operating an interactive display apparatus having a capturing unit, and the method may include: projecting an image onto a display screen; capturing with the capturing unit the image displayed on the display screen and a light of a pointing device irradiated onto the display screen; and determining coordinate information for the light of the pointing device irradiated onto the display screen based on the captured image, determining whether the light of the pointing device is moved outside of the displayed image based on the coordinate information, and if the light of the pointing device is moved outside of the displayed image, performing a predetermined operation from among a plurality of predetermined operations.

If the light of the pointing device is moved outside of the displayed image, the method may further include determining a direction the light of the pointing device is moved.

The predetermined operation may include at least one of a scrolling operation, a page-changing operation, a zooming operation, a menu operation, a drawing operation, a selecting operation, a window-controlling operation and an application-changing operation. The method for operating the interactive display apparatus may further include determining whether the light of the pointing device is moved inside of the displayed image within a predetermined time after moving outside of the displayed image, if the light of the pointing device is moved outside of the displayed image.

BRIEF DESCRIPTION OF THE DRAWINGS

The above and/or other aspects of the present invention will become apparent and more readily appreciated from the following description of the exemplary embodiments, taken in conjunction with the accompanying drawings of which:

FIG. 1 illustrates an example of an apparatus according to an exemplary embodiment of the present invention;

FIG. 2 illustrates an example of an operation of an apparatus according to an exemplary embodiment of the present invention;

FIG. 3 illustrates an example of an operation of an apparatus according to an exemplary embodiment of the present invention;

FIGS. 4A and 4B illustrate examples of irradiated spots of light according to exemplary embodiments of the present invention;

FIG. 5 illustrates an example of an operation according to exemplary embodiment of the present invention;

FIG. 6 illustrates an example of an operation according to exemplary embodiment of the present invention.

FIG. 7 illustrates an example of an operation according to exemplary embodiment of the present invention.

FIG. 8 illustrates an example of an operation according to exemplary embodiment of the present invention.

DETAILED DESCRIPTION OF THE EXEMPLARY EMBODIMENTS

Hereinafter, exemplary embodiments of the present invention will be described with reference to accompanying drawings, wherein like numerals refer to like elements and repetitive descriptions will be avoided as necessary.

References in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

As used herein, the term "pixel" should be understood to include a single pixel, and also the possibility of a plurality of pixels, however, the singular term "pixel" will be used hereinafter for simplicity. Further, as used herein the term "pixel" refers to a single point of an image, i.e., the smallest unit of an image which can be controlled.

Also, the term "spot," as used herein, refers to the area on a display screen (e.g., a projection screen) upon which light of a pointing device is irradiated. A "spot" may include a single pixel or a group of pixels on the projection screen upon which the light of the pointing device is irradiated. Thus, it should be noted that the size of the spot may differ from the size of a pixel.

It should be noted that while the exemplary embodiments described herein primarily describe using a projector and a projection-type display system, the scope of the present invention is not limited thereto. For example, a non-projection type display screen (e.g., a liquid crystal display, a light emitting diode display, plasma display panel, etc.) may employ a remotely mounted capturing device (e.g., camera) to capture a displayed image, including the irradiated light of the pointer as it is irradiated onto the screen. Consequently, exemplary embodiments of the present invention do not necessarily require a projector, and are not necessarily limited to projection-type display systems.

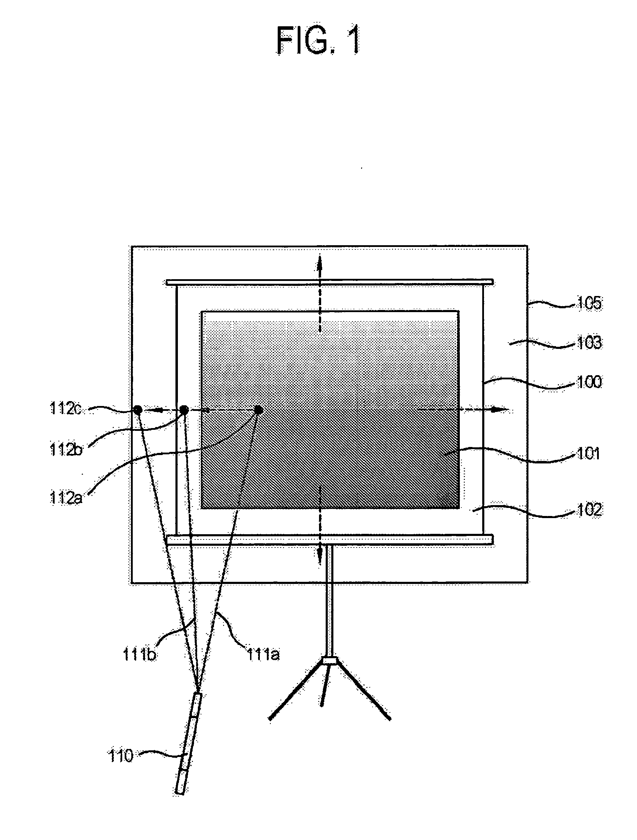

FIG. 1 illustrates a projection screen 100 and a pointing device 110. The terms "pointing device" and "pointer" are used interchangeably herein. An image may be projected onto the projection screen 100 by a projector (not shown). The area of the projection screen 100 upon which the image is projected is shown as a shaded area 101 in FIG. 1. The area 101 is referred to as the "projected area" hereinafter. The area outside of the area of the projected image is shown as the remaining area of the projection screen 102. As shown in FIG. 1, a light 111a of a pointing device 110 is irradiated onto the projected area 101 at a spot 112a. The light 111a is then moved from the projected area 101 to the area outside of the projection screen 102 at a spot 112b.

It should be noted that although FIG. 1 shows the area outside of the projection screen as being shown as the remaining area of the projection screen 102, the area outside of the projection screen also includes the area 103, which is outside of the projection screen itself. The light of the pointer can further be moved to a point 112c within area 103.

All of the points, 112a, 112b and 112c can be captured as part of a captured image. As used herein, the term "captured image" refers to the image which is captured after is it projected. Referring the FIG. 1, the area of the captured image (i.e., the content and boundaries of the captured image) includes 101, 102 and 103, which also includes the irradiated light of the pointer as it is moved by a user (e.g., points 112a, 112b and 112c). However, other exemplary embodiments of the present invention may simply include areas 101 and 102 as being within the total area of the captured image.

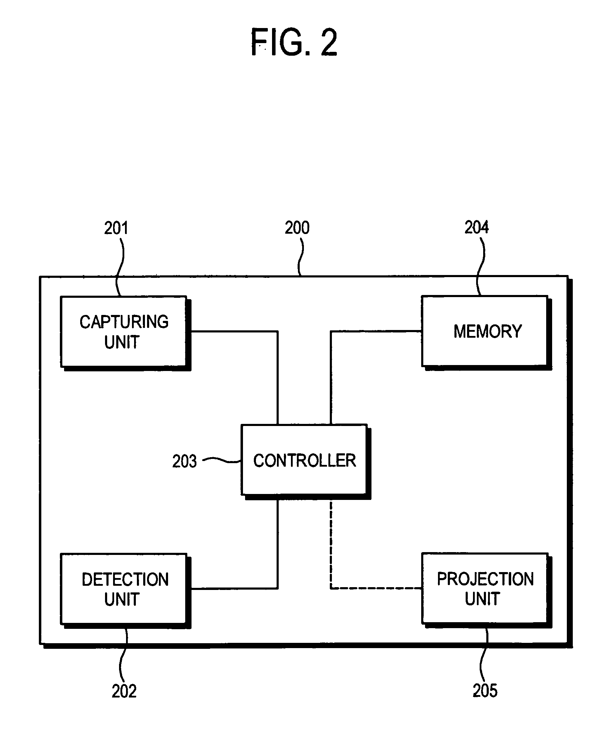

FIG. 2 illustrates an example of an exemplary embodiment of the present invention. As shown in FIG. 2, the apparatus 200 may include a capturing unit 201, a detection unit 202, a controller 203 and a memory 204. The capturing unit 201 may include a camera, or any device capable of capturing an image. FIG. 2 also shows a projection unit 205, which is shown to be connected to the controller 203 by a dashed line indicating that the projection unit 205 is optional.

According to an exemplary embodiment of the present invention, a projector (not shown) projects an original image onto a projection screen (not shown). A user can then use a pointing device (such as a laser pointer) to irradiate a light onto the projection screen. The capturing unit 201 can then capture the projected image together with the irradiated light of the pointer, both of which are simultaneously visible on the projection screen. The memory 204 can then be used to store the original image, the captured image including the irradiated light of the pointer, and image data accumulated over a period of time.

Once the capturing unit 201 captures the projected image together with the irradiated light of the pointer, the detection unit 202 can then determine if the captured image includes pixels corresponding to the light of the pointing device irradiated onto the projection screen. When the light of the pointer is irradiated onto the screen, the pixel or pixels upon which the light is irradiated will have an increased luminance. For example, the light of a laser pointer will typically show up as a bright spot on the screen. The irradiated spot will typically be brighter (as viewed by a user viewing the screen) than the pixel of other parts of the image of the presentation. As such, a luminance of a pixel corresponding to the irradiated spot will tend to be brighter than a luminance of a corresponding pixel of the image of the presentation. Thus, the detection unit 202 might determine whether a pixel of the captured image is greater than a predetermined threshold value, and if so, the detection unit 202 might determine that the pixel corresponds to a point on the projection screen onto which the light from the pointing device is irradiated.

As noted above, the luminance of the captured image (i.e., the output image) can be compared to the luminance of the image of the presentation (i.e., the image projected by the projector). Again, as noted above, the luminance of the spot where the laser is irradiated upon would tend to have a higher luminance than the corresponding spot on the original image. The determination can be applied to the entire image (i.e., all of the pixels within the image) so as to determine all points of the projected image which should be regarded as coordinates of the irradiated light. The determined coordinates can be stored together with the original image data in one place (e.g., a multimedia file) or separately in separate files or memory locations. As used herein, the phrase "stored together" means that the stored items are stored jointly in the same location, such as in a single file. However, it is not necessary to store the stored items simultaneously (i.e., at the same time) in order to store said items together.

It should be noted that while FIG. 2 shows a detecting unit 202 and a memory 204 which are separate from the controller 203, the controller 203 can be used to perform the tasks of the detecting unit 202 and/or the controller 203 can include internal memory which can be used to store the original image, the captured image including the irradiated light of the pointer, and/or image data accumulated over a period of time. In this case, once the projected image is captured along with the irradiated light of the pointer, the captured information can be stored in the memory 204. The controller 203 can then compare the luminance of the pixel of the captured irradiated spot stored in the memory with the luminance of the corresponding pixel of the image of the presentation. If the controller 203 determines that luminance of the pixel of the captured irradiated spot is greater than the luminance of the corresponding pixel of the image of the presentation, a determination may be made that the analyzed pixel corresponds to the pixel upon which the light of the pointer is irradiated. Consequently, coordinates corresponding to the position of the irradiated spot may be determined.

Once a determination is made as to which pixels correspond to the location of the irradiated spot, the position of the light of the pointing device irradiated onto the projection screen can be known. The position of the can then be specified using a coordinate system. For example, a coordinate system may be utilized so that each of the pixels included in the captured image of the projection screen can be assigned a unique coordinate. Different coordinate systems may be used to assign unique coordinates for each pixel of the captured image. In any case, the captured image can be divided into a discrete number of coordinates such that a unique coordinate may be determined for any location on the projection screen upon which the light from the pointing device is irradiated.

For example, a Cartesian coordinate system, having horizontal and vertical coordinates for each pixel, or a polar coordinate system, having a radius and an angle for each pixel, may equally be used. In the case that the Cartesian coordinate system is used, for example, determining coordinate information for the position of the light irradiated onto the projection screen (i.e., onto a pixel of the captured image) may include determining current horizontal and vertical coordinates of the light of the pointing device as it is irradiated onto the projection screen. The determined coordinates can then be stored for later use.

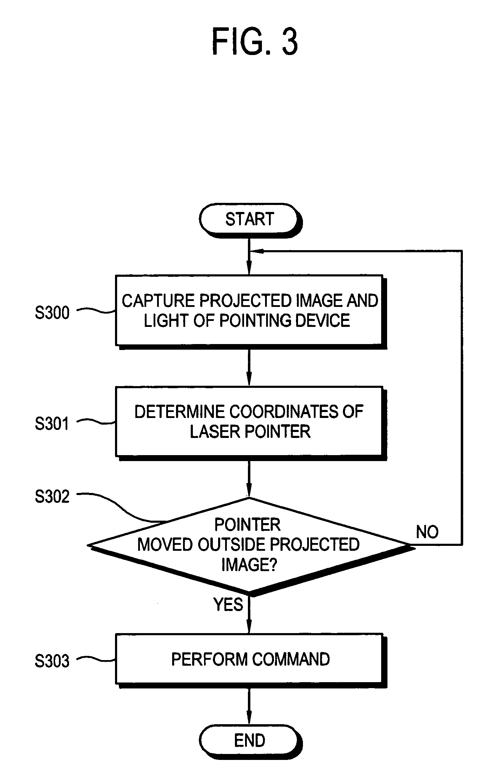

FIG. 3 illustrates an operation of an apparatus according to an exemplary embodiment of the present invention. After an initial image is projected onto a projection screen, the projected image is captured along with the light of the pointing device as it is irradiated onto the projection screen (S300). Once the image of the projected presentation and the irradiated light of the pointing device have been captured, the light of the pointing device irradiated onto the projection screen is detected, and based on the position of the detected light, coordinate information corresponding to the location of the irradiated spot as it appears on the projection screen is determined (S301). Next, a determination is made as to whether the light of the pointer is moved outside of the area of the projected image (S302). If the light of the pointer is moved outside of the area of the projected image (S302-Y), a predetermined operation may be performed (S303). Otherwise (S302-N), the process can be made to begin again. As shown in FIG. 3, the process ends after operation (S303). However, the process can begin again after operation (S303).

The above description of determining coordinates for the light irradiated from the pointing device describes the position of the spot of light irradiated from the pointing device as being located on a singular pixel of the captured image. That is, the size of the spot in the above examples is equal to the size of a pixel. However, as noted above, the term "pixel" should be understood to include not only a single pixel, but also a plurality of pixels. In the event that the spot includes a plurality of pixels, different approaches are possible for determining a coordinate (or coordinates) for the spot of light irradiated onto the projection screen.

In the case that the light irradiated from the pointing device actually covers a plurality of pixels of the captured image, each spot on the projection screen which is irradiated by the light of the pointing device may include multiple coordinates (i.e., so as to include the each of the plurality of pixels upon which the light of the pointing device is irradiated). In this situation, the size of the spot is larger than the size of the pixel, and if each pixel is specified by a single coordinate, the location of the spot on the image of the projection screen may be effectively described by a plurality of coordinates.

Alternatively, the pixel size may be set so as to be equal to the size of the irradiated spot. In this case, a group of pixels may be specified by a single coordinate. Thus, in this example, only a single coordinate would be needed to describe a spot of light irradiated onto the projection screen.

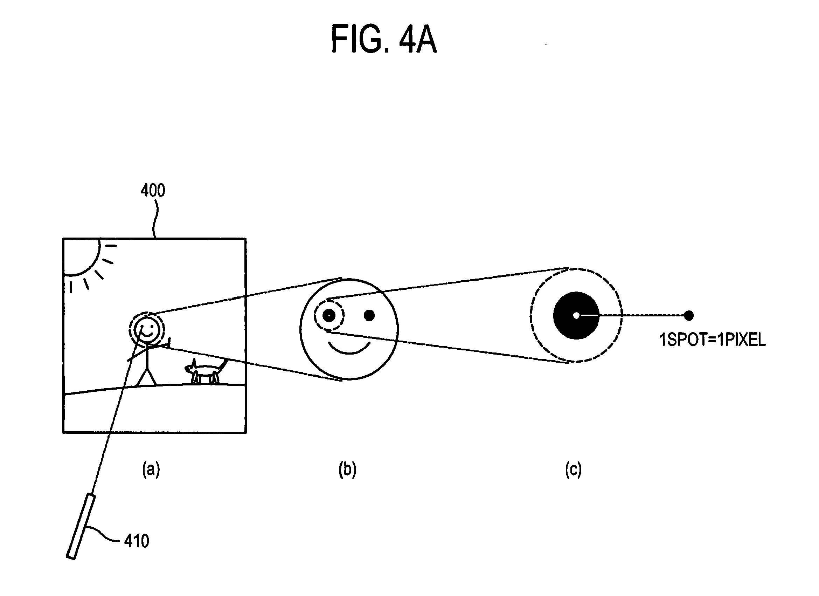

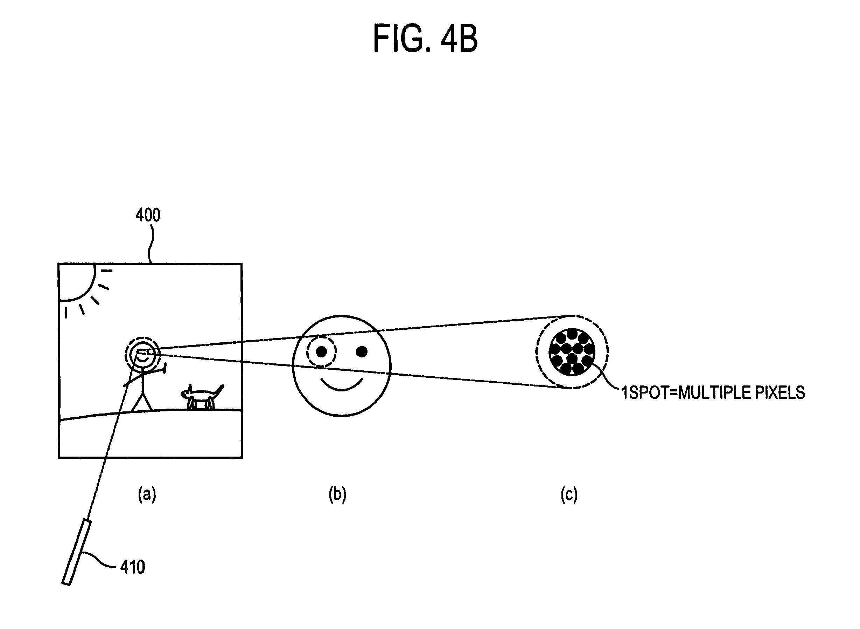

FIGS. 4A and 4B respectively show examples where a size of a spot of irradiated light is equal to and greater than a pixel size. As shown in FIG. 4A(a), an image 400 is projected onto a projection screen. The light from the pointing device 410 strikes the image 400 such that the spot covers the center of the person's eye. FIG. 4A(b) shows the spot as being on the person's left eye (shown as a small circle in the center of the eye). FIG. 4A(c) shows a close up view of the eye, where the spot (i.e., the small circle in the center) is the same size as a pixel of the image at that point. In this case, the coordinates for the spot correspond to the coordinates of the pixel. Thus, a single horizontal/vertical pair, for example, can be determined for the spot.

By contrast, FIG. 4B shows an example of an image where the spot from the light irradiated onto the projection screen is large enough to include a plurality of pixels. As shown in FIG. 4B(a), the image 400 is projected onto a projection screen. Again, the light from the pointing device 410 strikes the image 400 such that the spot covers the center of the person's eye. FIG. 4B(b) shows the spot as being on the person's left eye. However, in the close up view of FIG. 4B(c), the spot (i.e., the large circle in the center) can be seen as including a number of pixels (the pixels are shown as small circles within the larger circle representing the spot). In this case, multiple coordinates (e.g., multiple horizontal/vertical pairs) may be determined for the spot.

Once the coordinates are determined for the light of pointing device, the coordinate information can then be stored in the memory. The stored information corresponding to previous positions of the light of the pointing device irradiated onto the projection screen can then be referred to and compared to the current position of the light of the pointing device irradiated onto the projection screen (i.e., by comparing the stored coordinate information corresponding to previous positions of the light of the pointing device to the coordinate information corresponding to the current position of the pointing device).

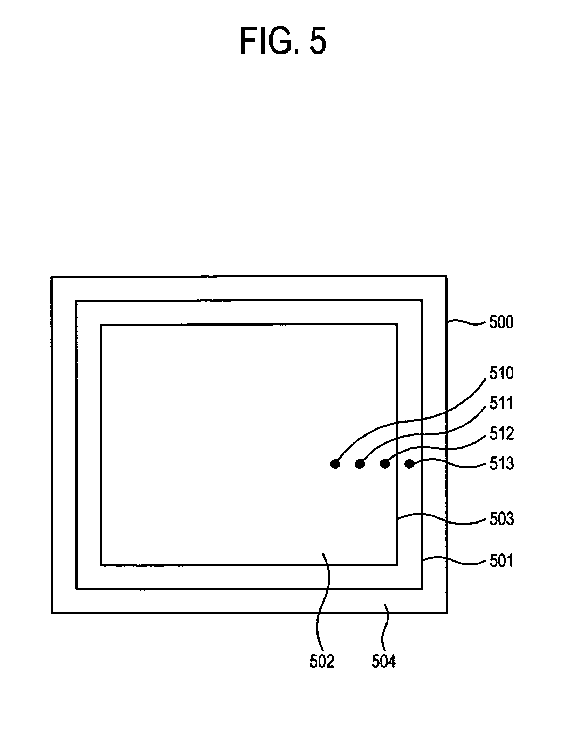

Based on the above comparison, it is possible to determine if the light of the pointer moves outside of the area of the projected image, provided that the area of the projected image is also known. FIG. 5 shows an example according to an exemplary embodiment of the present invention. As shown in FIG. 5, the captured image includes everything the boundary 500. The projection screen is defined by boundary 501. The projected image is defined by boundary 503 and includes the inner area 502.

In order to determine whether the light of the pointer moves outside of the projected area, the coordinates of the boundary 503 could be compared to previous and current coordinates of the light of the pointing device. That is, the coordinates of the line constituting the boundary 503 should be known or determined so as to facilitate the comparison.

Alternatively, the coordinates of the entire area lying outside boundary 503 could be compared with the coordinates of the pointer. For example, the boundary 503 (and/or boundary area lying outside of boundary 503) could be determined based on an analysis of the captured image data.

In another embodiment, a user could select the boundary line by reviewing the captured image and using a software application which permits a selection of the boundary line/area within the captured image, for example. In any case, the coordinates of the light of the pointer can be compared with those of the boundary line/area to determine whether the light of pointer moves from an area inside the projected image to an area outside the projected image.

In yet another embodiment, the coordinates corresponding to the light of the pointer can be compared to the original image of the presentation (i.e., the image projected by the projector). If the coordinates corresponding to the light of the pointer move from inside the known coordinates of the original image of the presentation to a location outside of the known coordinates of the original image of the presentation, a determination may be made that the light of the pointer has moved outside the area of the projected image.

It should also be noted that since the area of the captured image may extend even further out to the boundary 500 (i.e., the boundary of the captured image), an additional determination is possible as to whether the pointer moves across the boundary 501, or alternatively, into the area 504. Thus, the number of distinguishable movements is increased. Consequently, an additional number of predetermined operations are also possible.

As shown in FIG. 5, the light from the pointer is moved from an initial position 510, to a second position 511 and a third position 512, each of which lie within the boundary 503 of the projected image 502. The light from the pointer is then moved outside the area of the projected image 502 to a point 513 which is in an area between the boundary 503 of the projected image 502 and the boundary of the projection screen 501. Once the pointer is determined to have moved outside the area of the projected image (e.g., across the boundary 503), a predetermined function may be performed. Alternatively, the coordinates of the pointer could be compared to the coordinates of the entire area lying outside boundary 503, and if the coordinates of the light of the pointer indicate that the light of the pointer has moved from within the area of the projected image to the area outside of the projected image, the determination could be made accordingly.

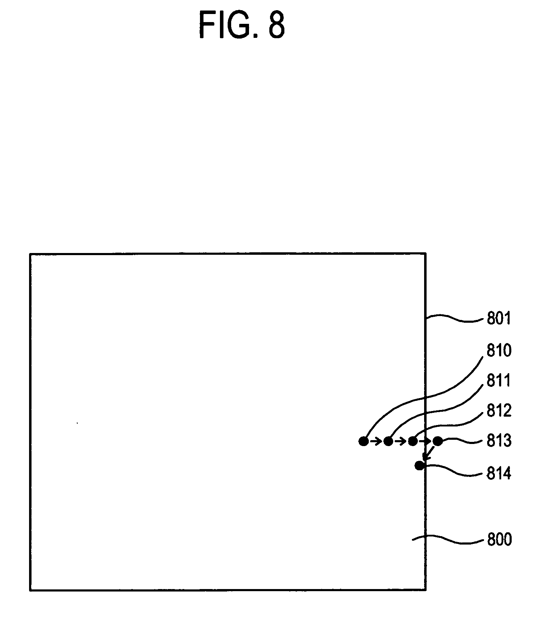

It should be noted that the position examples shown in FIG. 5, i.e., 510, 511, 512 and 513, as well as the points shown in FIG. 8 (discussed below), are merely exemplary. The light of the pointer does not only have to be located at discrete points. Instead, the light of the pointer may in fact appear to move continuously. Further, different capturing devices may capture the projected image at different rates. As a result the captured image may show a range of different results, from a small number of discrete points at which the light of the pointer was irradiated, to large number of points, such that the irradiated light appears as a continuous streak of light. In any case, the irradiated light of the pointer can be captured and quantized so that coordinates of the irradiated light of the pointer may be determined.

In addition to determining whether if the light of the pointing device is moved outside of the projected image, the direction of the movement of the light of the pointer can also be determined based on the coordinate information. First, a number of discrete directions may be utilized so as to distinguish different directional movements of the light of the pointer. Then, as the light of the pointer is moved, the coordinates of corresponding to the successive movements can be stored. Referring to FIG. 5, each of the coordinates corresponding to the points 510, 511, 512 and 513 in FIG. 5 can be stored in memory. Then, based on the accumulation of the stored coordinates a specific direction may be determined.

For example, the direction of movement of the light of the pointer in FIG. 5 may be determined as being at an angle of 0 degrees, or in a LEFT-RIGHT direction, etc. However, these directional designations are merely examples. The choice of how a direction is specified is arbitrary. For each uniquely determinable direction, it is possible to assign a specific predetermined operation which may result from a movement in a particular direction. For example, if the captured image is divided into 360 degrees, 360 different directional movements are theoretically possible, and thus, 360 predetermined resulting operations may be invoked. Again, the choice of assigning 360 degrees of possible directional movements is an arbitrary one.

In accordance with an alternative exemplary embodiment, the point 513 which is positioned outside the projected image 502 may be not actually detected but calculated on the basis of the previous positions 510, 511 and 512. In a projection environment using a projector, the projected image is usually positioned leaving a margin inside the projection screen, but it may be impossible to detect a pointing position of a laser pointer since an area beyond the projection screen is made of glass or a non-reflective material in some cases. Thus, in this exemplary embodiment, the current position of the laser pointer can be estimated on the basis of the previous coordinates of the pointer instead of detecting the point positioned beyond the projected area 502.

Assume that the initial position 510, the second position 511 and the third position 512 of FIG. 5 are the previously detected pointers, respectively. In this case, the coordinates of the n-th point can be calculated by the following equations.

$$P(x) = P_n(x) + \sum_{n=2}^{n-1} a_n\left(P_n(x) - P_{n-1}(x)\right)$$

$$P(y) = P_n(y) + \sum_{n=2}^{n-1} a_n\left(P_n(y) - P_{n-1}(y)\right)$$

Where, p(x) and p(y) are x and y coordinates of the n-th pointer, Pn(x) and Pn(y) are x and y coordinates of the previous pointers, and an is a weight between the respective pointers. The above equations can forecast the position of the next pointer though a series of previous coordinates.

Referring to FIG. 5, let a2 = 0.4 and a3 = 0.6 by way of example. The later the pointer is, the higher the weight is given. In this case, when the distances between the respective pointers are obtained and then multiplied by the respective weights, an average moved distance is obtained such that the highest weight is given to a moved distance between the pointer 2 and the pointer 3 and the lowest weight is given to the moved distance between the pointer 1 and the pointer 2. Hence, the coordinates of the pointer 4 can be estimated by adding the obtained average moved distance to the pointer 3. Here, the sum of the weights must equal 1.

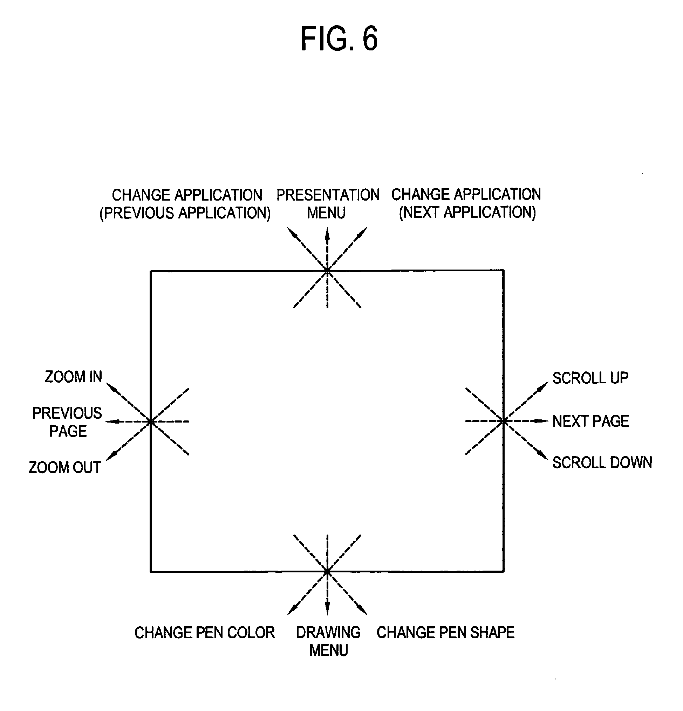

FIG. 6 shows an example where twelve distinct movements are possible. As shown in FIG. 6, depending on which way the light of the pointer is moved, a distinct operation may be invoked. As noted above, the determination of the direction depends on the accumulation of coordinates corresponding to the successive movements of the light of the pointer, as determined by analyzing the captured image. The operations shown in FIG. 6 are merely exemplary, and the scope of present invention is not limited thereto.

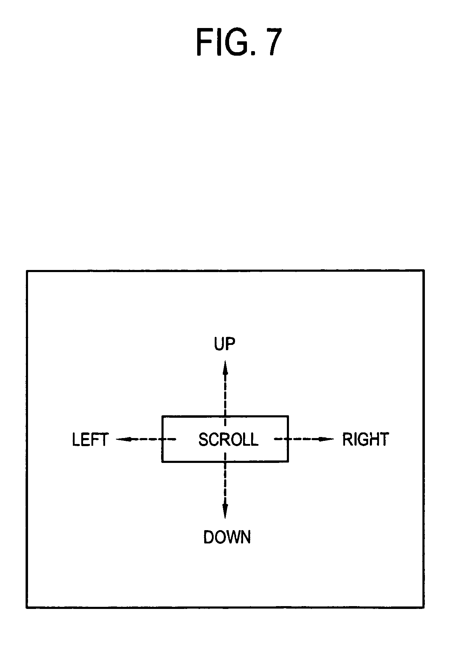

FIG. 7 shows an example of how the presentation image may be scrolled in response to the light of the pointer moving the direction corresponding to one of the scrolling operations shown in the example of FIG. 6. For example if a user moves the pointer such that the light of the pointer moves outside of the area of the projected image, and in a direction corresponding to one of the scrolling operations, the presentation can be made to scroll in the corresponding direction, such as shown in FIG. 7. It should be noted that the above description is merely exemplary, and further, the term "scrolling operation" is not necessarily limited to the type of scrolling described in this example. For example, scrolling may occur by line, by page, etc. Also, the screen may scroll in a smooth fashion, or in a sudden change. Many different types of "scrolling" are possible.

Additionally, while the above example describes "scrolling," the operations possible according to exemplary embodiments of the present invention are not limited to scrolling operations. Examples of other predetermined operations may include a page-changing operation, zooming operation, a menu operation, a drawing operation, a selecting operation, a window-controlling operation and an application-changing operation. Again, the above list of operations is not exhaustive and the scope of the present invention is not limited thereto.

Furthermore, the operation may include a single operation, or a plurality of operations. For example, a certain movement of the pointer could be made to invoke a combination of multiple operations.

It is also possible to detect additional movements of the light of the pointer. For example, it is possible to detect whether the light of the pointing device is moved outside of the projected image, and then moved back inside of the projected image within a predetermined time after moving outside of the projected image. This determination can be made in a manner similar to that described above, i.e., based on the coordinate information corresponding to the previous position and the current position. FIG. 8 shows an example of such an operation.

As shown in FIG. 8, the area of the projected image receives the light of the pointer at point 810, 811 and 812. Note that FIG. 8 includes a dashed line with arrows between the points in order to show a direction of movement of the irradiated light of the pointer within the area of the projected image 800. The irradiated light of the pointer then moves to the point 813, which is the area outside of the projected image 801, and then back inside the area within the projected image 801.

By analyzing the coordinate information corresponding to the movements of the pointer, a determination can be made that the pointer has moved from within the area of the projected image 800, to the area outside of the projected image 801, and finally back within the area of the projected image 800. Further, the determination that the pointer moves finally back within the area of the projected image 800 can be made depending on the amount of time elapsed between the irradiated light of the pointer moving out from the area of the projected image 800 to the area outside of the projected image 801, and then back within the area of the projected image 800. As a result, additional determinations are possible as to whether the pointer moves out of and back into the area of the projected image. Thus, the number of distinguishable movements is increased. Consequently, an additional number of predetermined operations are also possible.

Furthermore, the direction of the irradiated light of the pointer of FIG. 8 can also be determined in a manner analogous that that discussed above with respect to FIG. 6. Again, as the number of distinguishable movements is increased, additional predetermined operations based on the determined direction of movement of the irradiated light of the pointer are possible.

As described above, there are provided an interactive display apparatus capable of supporting an additional interactive function, and an operating method thereof.

For example, if the pointing device is moved from the inside to the outside of the displayed image, the interactive display apparatus recognizes that a user will do a certain function, and performs a predetermined function in accordance with the moving direction of the pointing device, and the direction and angle of the screen the pointing device moves out. Hence, a user can intuitively and easily use an additional interactive function.

Further, in the case that the pointing device is moved from the inside to the outside of the displayed image, it is possible to minimize an error due to unintended movement of the pointing device.

**Claims**

1. A method for operating an interactive display apparatus having a capturing unit (201), the method comprising:

   projecting an image onto a projection screen (501);
   capturing with the capturing unit (201) the projected image displayed on the projection screen (501) and a light of a pointing device irradiated onto the projection screen (501); and
   determining coordinate information for the light of the pointing device irradiated onto the projection screen (501) based on the captured image,
   **characterised by**:

   capturing the captured image with the capturing unit (201), wherein the area of the captured image (500) is greater than the area of the projected image (502) displayed on the projection screen (501);
   determining whether the light of the pointing device is moved outside of the area of the projected image (502) based on the coordinate information, and
   if the light of the pointing device is moved outside of the area of the projected image (502), performing a predetermined operation from among a plurality of predetermined operations.

2. The method of claim 1, wherein if the light of the pointing device is moved outside of the area of the projected image (502), the method further comprises determining a direction the light of the pointing device is moved.

3. The method of claim 2, wherein the predetermined operation is selected from among the plurality of predetermined operations based on the direction the light of the pointing device.

4. The method of any preceding claim, wherein the determining of the coordinate information includes determining current horizontal and vertical coordinates of the light of the pointing device irradiated onto the projection screen (501).

5. The method of any preceding claim, wherein the determining whether the light of the pointing device is moved outside of the area of the projected image (502) based on the coordinate information comprises comparing a previous position of the light of the pointing device irradiated onto the projection screen with a current position of the light of the pointing device irradiated onto the projection screen (501).

6. The method of claim 5, wherein the determining whether the light of the pointing device is moved outside of the area of the projected image (502) is based on whether the previous position of the light of the pointing device irradiated onto the projection screen (501) is inside the area of the projected image (502) and a current position of the light of the pointing device irradiated onto the projection screen (501) is outside the area of the projected image (502).

7. The method of any preceding claim, wherein the determining of the coordinate information includes determining whether a pixel of the captured image is greater than a predetermined threshold value.

8. The method of any preceding claim, wherein the predetermined operation includes at least one of a strolling operation, a page-changing operation, a zooming operation, a menu operation, a drawing operation, a selecting operation, a window-controlling operation and an application-changing operation.

9. The method of any preceding claim, further comprising determining whether the light of the pointing device is moved inside of the area of the projected image (502) within a predetermined time after moving outside of the area of the projected image (502), if the light of the pointing device is moved outside of the area of the projected image (502).

10. An interactive display apparatus comprising:

a capturing unit (201) operable to capture an image including a projected image (502) which is displayed on a projection screen (501) and a light of a pointing device irradiated onto the projection screen (501);
a memory (204) which stores the captured image;
a detection unit (202) which determines coordinate information for the light of the pointing device irradiated onto the projection screen (501) based on the captured image; and
**characterised in that**:

the capturing unit (201) is operable to capture the captured image, wherein the area of the captured image (500) is greater than the area of the projected image (502) displayed on the projection screen (501); and
a controller is operable to determine whether the light of the pointing device is moved outside of the projected image (502) based on the coordinate information, and controls the apparatus to perform a predetermined operation from among a plurality of predetermined operations if the light of the pointing device is moved outside of the projected image (502).

11. The interactive display apparatus of claim 10, wherein the pointing device is a laser pointer.

12. The interactive display apparatus of claim 10, wherein the detection unit (202) further determines a direction the light of the pointing device is moved, if the light of the pointing device is moved outside of the area of the projected image (502).

13. The interactive display apparatus of claim 12, wherein the predetermined operation is selected from among the plurality of predetermined operations based on the direction the light of the pointing device.

14. The interactive display apparatus of claim 10, wherein the controller is operable to determine whether the light of the pointing device is moved outside of the area of the projected image (502) based on the coordinate information comprises comparing a previous position of the light of the pointing device irradiated onto the projection screen (501) with a current position of the light of the pointing device irradiated onto the projection screen (501).

15. The interactive display apparatus of claim 10, further comprising a projector (205) operable to project the projected image (502) onto the projection screen (501).

**Patentansprüche**

1. Verfahren zum Betreiben einer interaktiven Anzeigevorrichtung, die eine Erfassungseinheit (201) hat, wobei das Verfahren Folgendes umfasst:

Projizieren eines Bildes auf einen Projektionsschirm (501);
mit der Erfassungseinheit (201) Erfassen des projizierten Bildes, das auf dem Projektionsschirm (501) angezeigt wird, und eines Lichtes einer Zeigevorrichtung, das auf den Projektionsschirm (501) geworfen wird; und
Bestimmen von Koordinateninformationen für das Licht der Zeigevorrichtung, das auf den Projektionsschirm (501) geworfen wird, auf der Basis des erfassten Bildes,
**gekennzeichnet durch**:

Erfassen des erfassten Bildes mit der Erfassungseinheit (201), wobei die Fläche des erfassten Bildes (500) größer als die Fläche des projizierten Bildes (502) ist, das auf dem Projektionsschirm (501) angezeigt wird; Bestimmen, ob das Licht der Zeigevorrichtung aus der Fläche des projizierten Bildes (502) herausbewegt wird, auf der Basis der Koordinateninformationen, und wenn das Licht der Zeigevorrichtung aus der Fläche des projizierten Bildes (502) herausbewegt wird, Ausführen einer vorgegebenen Operation aus mehreren vorgegebenen Operationen.

2. Verfahren nach Anspruch 1, wobei wenn das Licht der Zeigevorrichtung aus der Fläche des projizierten Bildes (502) herausbewegt wird, das Verfahren ferner das Bestimmen einer Richtung umfasst, in die das Licht der Zeigevorrichtung bewegt wird.

3. Verfahren nach Anspruch 2, wobei die vorgegebene Operation unter den mehreren vorgegebenen Operationen auf der Basis der Richtung des Lichtes der Zeigevorrichtung ausgewählt wird.

4. Verfahren nach einem der vorherigen Ansprüche, wobei das Bestimmen der Koordinateninformationen das Bestimmen der aktuellen horizontalen und vertikalen Koordinaten des Lichtes der Zeigevorrichtung umfasst, das auf den Projektionsschirm (501) geworfen wird.

5. Verfahren nach einem der vorherigen Ansprüche, wobei das Bestimmen, ob das Licht der Zeigevorrichtung sich aus der Fläche des projizierten Bildes (502) herausbewegt, auf der Basis der Koordinateninformationen das Vergleichen einer vorherigen Position des Lichtes der Zeigevorrichtung, das auf den Projektionsschirm geworfen wird, mit einer aktuellen Position des Lichtes der Zeigevorrichtung umfasst, das auf den Projektionsschirm (501) geworfen wird.

6. Verfahren nach Anspruch 5, wobei das Bestimmen, ob das Licht der Zeigevorrichtung aus der Fläche des projizierten Bildes (502) herausbewegt wird, darauf beruht, ob die vorherige Position des Lichtes der Zeigevorrichtung, das auf den Projektionsschirm (501) geworfen wird, sich in der Fläche des projizierten Bildes (502) befindet und eine aktuelle Position des Lichtes der Zeigevorrichtung, das auf den Projektionsschirm (501) geworfen wird, sich außerhalb der Fläche des projizierten Bildes (502) befindet.

7. Verfahren nach einem der vorherigen Ansprüche, wobei das Bestimmen der Koordinateninformationen das Bestimmen umfasst, ob ein Pixel des erfassten Bildes größer als ein vorgegebener Schwellwert ist.

8. Verfahren nach einem der vorherigen Ansprüche, wobei die vorgegebene Operation mindestens eine aus einer Scroll-Operation, einer Seitenwechseloperation, einer Zoomoperation, einer Menüoperation, einer Zeichnenoperation, einer Auswahloperation, einer Fenstersteuerungsoperation und einer Anwendungswechseloperation umfasst.

9. Verfahren nach einem der vorherigen Ansprüche, das ferner das Bestimmen umfasst, ob das Licht der Zeigevorrichtung in die Fläche des projizierten Bildes (502) innerhalb einer vorgegebenen Zeit nach dem Herausbewegen aus der Fläche des projizierten Bildes (502) bewegt wird, wenn das Licht der Zeigevorrichtung aus der Fläche des projizierten Bildes (502) bewegt ist.

10. Interaktive Anzeigevorrichtung, umfassend:

eine Erfassungseinheit (201), die zum Erfassen eines Bildes betrieben werden kann, einschließlich eines projizierten Bildes (502), das auf einem Projektionsschirm (501) angezeigt wird, und eines Lichtes einer Zeigevorrichtung, das auf den Projektionsschirm (501) geworfen wird;
einen Speicher (204), der das erfasste Bild speichert;
eine Detektionseinheit (202), die die Koordinateninformationen für das Licht der Zeigevorrichtung, welches auf den Projektionsschirm (501) geworfen wird, auf der Basis des erfassten Bildes bestimmt; und
**dadurch gekennzeichnet, dass**:

die Erfassungseinheit (201) zum Erfassen des erfassten Bildes betrieben werden kann, wobei die Fläche des erfassten Bildes (500) größer als die Fläche des projizierten Bildes (502) ist, welches auf dem Projektionsschirm (501) angezeigt wird; und
ein Controller zum Bestimmen betrieben werden kann, ob das Licht der Zeigevorrichtung auf der Basis der Koordinateninformationen aus dem projizierten Bild (502) herausbewegt wird, und die Vorrichtung zum Ausführen einer vorgegebenen Operation aus mehreren vorgegebenen Operationen steuert, wenn das Licht der Zeigevorrichtung aus dem projizierten Bild (502) herausbewegt wird.

**EP 2 383 609 B1**

**11.** Interaktive Anzeigevorrichtung nach Anspruch 10, wobei die Zeigevorrichtung ein Laserpointer ist.

**12.** Interaktive Anzeigevorrichtung nach Anspruch 10, wobei die Detektionseinheit (202) ferner eine Richtung bestimmt, in die das Licht der Zeigevorrichtung bewegt wird, wenn das Licht der Zeigevorrichtung aus der Fläche des projizierten Bildes (502) herausbewegt wird.

**13.** Interaktive Anzeigevorrichtung nach Anspruch 12, wobei die vorgegebene Operation unter den mehreren vorgegebenen Operationen auf der Basis der Richtung des Lichtes der Zeigevorrichtung ausgewählt wird.

**14.** Interaktive Anzeigevorrichtung nach Anspruch 10, wobei der Controller zum Bestimmen betrieben werden kann, ob das Licht der Zeigevorrichtung aus der Fläche des projizierten Bildes (502) herausbewegt wird, auf der Basis der Koordinateninformationen, was das Vergleichen einer vorherigen Position des Lichtes der Zeigevorrichtung, das auf den Projektionsschirm (501) geworfen wird, mit einer aktuellen Position des Lichtes der Zeigevorrichtung umfasst, das auf den Projektionsschirm (501) geworfen wird.

**15.** Interaktive Anzeigevorrichtung nach Anspruch 10, die ferner einen Projektor (205) umfasst, der zum Projizieren des projizierten Bildes (502) auf den Projektionsschirm (501) betrieben werden kann.

**Revendications**

**1.** Procédé pour actionner un appareil d'affichage interactif comprenant une unité de capture (201), lequel procédé consiste à :

- projeter une image sur un écran de projection (501) ;
- capturer à l'aide de l'unité de capture (201) l'image projetée et affichée sur l'écran de projection (501) et une lumière d'un dispositif de pointage envoyée sur l'écran de projection (501) ; et
- déterminer des informations de coordonnées de la lumière du dispositif de pointage envoyée sur l'écran de projection (501) en fonction de l'image capturée ; **caractérisé en ce qu'**il consiste à :
- capturer l'image capturée à l'aide de l'unité de capture (201), la surface de l'image capturée (500) étant supérieure à la surface de l'image projetée (502) affichée sur l'écran de projection (501) ;
- déterminer si la lumière du dispositif de pointage se déplace hors de la surface de l'image projetée (502) en fonction des informations de coordonnées ; et
- si la lumière du dispositif de pointage se déplace hors de la surface de l'image projetée (502), effectuer une opération prédéterminée parmi plusieurs opérations prédéterminées.

**2.** Procédé selon la revendication 1, dans lequel, si la lumière du dispositif de pointage se déplace hors de la surface de l'image projetée (502), le procédé consiste en outre à déterminer une direction dans laquelle la lumière du dispositif de pointage se déplace.

**3.** Procédé selon la revendication 2, dans lequel l'opération prédéterminée est choisie parmi plusieurs opérations prédéterminées en fonction de la direction de la lumière du dispositif de pointage.

**4.** Procédé selon l'une quelconque des revendications précédentes, dans lequel déterminer les informations de coordonnées consiste à déterminer des coordonnées horizontales et verticales courantes de la lumière du dispositif de pointage envoyée sur l'écran de projection (501).

**5.** Procédé selon l'une quelconque des revendications précédentes, dans lequel déterminer si la lumière du dispositif de pointage se déplace hors de la surface de l'image projetée (502) en fonction des informations de coordonnées consiste à comparer une position précédente de la lumière du dispositif de pointage envoyée sur l'écran de projection à une position courante de la lumière du dispositif de pointage envoyée sur l'écran de projection (501).

**6.** Procédé selon la revendication 5, dans lequel déterminer si la lumière du dispositif de pointage se déplace hors de la surface de l'image projetée (502) se fait selon que la position précédente de la lumière du dispositif de pointage envoyée sur l'écran de projection (501) se situe dans la surface de l'image projetée (502) et que la position courante de la lumière du dispositif de pointage envoyée sur l'écran de projection (501) se situe hors de la surface de l'image projetée (502).

11

**7.** Procédé selon l'une quelconque des revendications précédentes, dans lequel déterminer les informations de coordonnées consiste à déterminer si un pixel de l'image capturée est supérieur à une valeur seuil prédéterminée.

**8.** Procédé selon l'une quelconque des revendications précédentes, dans lequel l'opération prédéterminée comprend l'une au moins d'une opération de déroulement, une opération de changement de page, une opération d'agrandissement, une opération de menu, une opération « tirer », une opération de sélection, une opération de commande de fenêtre, et une opération de changement d'application.

**9.** Procédé selon l'une quelconque des revendications précédentes, consistant en outre à déterminer si la lumière du dispositif de pointage se déplace dans la surface de l'image projetée (502) pendant un temps prédéterminé après s'être déplacée hors de la surface de l'image projetée (502), dans le cas où la lumière du dispositif de pointage se déplace hors de la surface de l'image projetée (502).

**10.** Appareil d'affichage interactif comprenant :

- une unité de capture (201) permettant de capturer une image comprenant une image projetée (502) affichée sur un écran de projection (501) et une lumière d'un dispositif de pointage envoyée sur l'écran de projection (501) ;
- une mémoire (204) qui stocke l'image capturée ;
- une unité de détection (202) qui détermine des informations de coordonnées de la lumière du dispositif de pointage envoyée sur l'écran de projection (501) en fonction de l'image capturée ; et

**caractérisé en ce que** :

- l'unité de capture (201) permet de capturer l'image capturée, la surface de l'image capturée (500) étant supérieure à la surface de l'image projetée (502) affichée sur l'écran de projection (501) ; et
- une unité de commande permet de déterminer si la lumière du dispositif de pointage se déplace hors de l'image projetée (502) en fonction des informations de coordonnées, et de commander l'appareil afin d'effectuer une opération prédéterminée parmi plusieurs opérations prédéterminées si la lumière du dispositif de pointage se déplace hors de l'image projetée (502).

**11.** Appareil d'affichage interactif selon la revendication 10, dans lequel le dispositif de pointage est un pointeur laser.

**12.** Appareil d'affichage interactif selon la revendication 10, dans lequel l'unité de détection (202) détermine en outre une direction dans laquelle la lumière du dispositif de pointage se déplace, dans le cas où la lumière du dispositif de pointage se déplace hors de la surface de l'image projetée (502).

**13.** Dispositif d'affichage interactif selon la revendication 12, dans lequel l'opération prédéterminée est choisie parmi plusieurs opérations prédéterminées en fonction de la direction de la lumière du dispositif de pointage.

**14.** Appareil d'affichage interactif selon la revendication 10, dans lequel l'unité de commande permet de déterminer si la lumière du dispositif de pointage se déplace hors de la surface de l'image projetée (502) en fonction des informations de coordonnées, ceci en comparant une position précédente de la lumière du dispositif de pointage envoyée sur l'écran de projection (501) à une position courante de la lumière du dispositif de pointage envoyée sur l'écran de projection (501).

**15.** Appareil d'affichage interactif selon la revendication 10, comprenant en outre un projecteur (205) permettant de projeter l'image projetée (502) sur l'écran de projection (501).

# FIG. 1

# FIG. 2

201    200    204

CAPTURING UNIT

MEMORY

203 — CONTROLLER

DETECTION UNIT

PROJECTION UNIT

202    205

# FIG. 3

START

S300 — CAPTURE PROJECTED IMAGE AND LIGHT OF POINTING DEVICE

S301 — DETERMINE COORDINATES OF LASER POINTER

S302 — POINTER MOVED OUTSIDE PROJECTED IMAGE?

NO

YES

S303 — PERFORM COMMAND

END

FIG. 4A

# FIG. 4B

400

410

(a)

(b)

(c)

1SPOT=MULTIPLE PIXELS

# FIG. 5

# FIG. 6

CHANGE APPLICATION   PRESENTATION   CHANGE APPLICATION
(PREVIOUS APPLICATION)      MENU        (NEXT APPLICATION)

ZOOM IN

PREVIOUS
PAGE

ZOOM OUT

SCROLL UP

NEXT PAGE

SCROLL DOWN

CHANGE PEN COLOR   DRAWING   CHANGE PEN SHAPE
                     MENU

# FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1087327 A